# EUROPÄISCHE PATENTANMELDUNG

(11) **EP 4 254 862 A1**
(43) Veröffentlichungstag der Anmeldung: **04.10.2023**
(21) Anmeldenummer: 22164989.0
(22) Anmeldetag: 29.03.2022
(51) Int. Cl.: H04L 9/40, H04W 12/08, G06F 21/62

(54) **VERFAHREN ZUM DURCHFÜHREN EINES AUTORISIERUNGSVORGANGS EINER CLIENT-ANWENDUNG**

(71) Anmelder: Siemens Aktiengesellschaft, 80333 München (DE)
(72) Erfinder: Knierim, Christian, 81373 München (DE); Schattleitner, Angela, 83104 Tuntenhausen (DE)
(74) Vertreter: Siemens Patent Attorneys

(57) **Zusammenfassung**

Die Erfindung betrifft ein Verfahren zum Durchführen eines Autorisierungsvorgangs einer Client-Anwendung (3) in einem Computernetzwerk-System (1), wobei
- ein individuelles Vertrauensmaß (12) der Client-Anwendung (3) mit einer Authentisierungsanwendung (6) generiert wird,
- eine Kontextinformation (13) zu der Client-Anwendung (3) von der Authentisierungsanwendung (6) generiert wird,
- in Abhängigkeit von der Kontextinformation (13) und dem Vertrauensmaß (12) eine Zugriffsinformation (14) der Client-Anwendung (3) für ein Anwendungsprogramm (7) des Computernetzwerk-Systems (1) bestimmt wird. Des Weiteren betrifft die Erfindung ein Verfahren zum Ausführen eines Anwendungsprogramms (7), ein Computernetzwerk-System (1), ein Computerprogrammprodukts (10) sowie einen elektronisch lesbaren Datenträger (11).

## Beschreibung

Die Erfindung betrifft ein Verfahren zum Durchführen eines Autorisierungsvorgangs einer Client-Anwendung in einem Computernetzwerk-System. Ebenfalls betrifft die Erfindung ein Verfahren zum Ausführen eines Anwendungsprogramms. Des Weiteren betrifft die Erfindung ein Computernetzwerk-System mit zumindest einer Client-Anwendung. Ferner betrifft die Erfindung ein Computerprogrammprodukt sowie einen elektronisch lesbaren Datenträger.

In der Informationstechnik ist ein berechtigter Zugriff auf Systeme, Applikationen und/oder Netzwerke essentiell. Hierfür sind verschiedene Sicherheitssysteme und/oder Sicherheitsarchitekturen bekannt. Beispielsweise kann mit der sogenannten "Zero-Trust-Sicherheit" ein Sicherheitsmodell bereitgestellt werden, bei dem niemandem automatisch vertraut wird. Bei einem "Zero-Trust-Modell" wird jeder Zugriff auf ein Netzwerk mehrfach geprüft, zum Beispiel durch Mechanismen wie die Multi-Faktor-Authentisierung. Dies dient insbesondere für die Cyber-Sicherheit. Leitsatz einer "Zero-Trust-Architektur" ist "Vertraue niemandem, prüfe alles". Somit können unzählige Anwendungen und Geräte besser geschützt werden.

Zero-Trust-Datensicherheit ist wichtig, da sie ein zuverlässiges Cybersicherheits-Framework zum Schutz gegen fortgeschrittene Angriffe bietet, die auf komplexe IT-Umgebungen mit dynamischen Workloads abzielen, bei denen es zu häufigen Standort- und Gerätewechseln kommt. Besonders sinnvoll sind Zero-Trust-Architekturen auch deshalb, weil Multi-Cloud- und Hybrid-Cloud-Deployments sich immer mehr durchsetzen und sich somit die Anzahl der in den Unternehmen verwendeten, nach extern exponierten Anwendungen erhöht.

Bei einem Zero-Trust-Modell wird jede einzelne Identität im Netzwerk auf ihr Risiko überprüft, wobei Aktivitäten zum Teil in Echtzeit genau nachverfolgt werden. Im Mittelpunkt dieses Ansatzes steht das Prinzip des Least-Privilege-Zugriffs, was bedeutet, dass jedem Benutzer nur so viel Zugriff gewährt wird, wie er benötigt, um die vorliegende Aufgabe auszuführen. Zero-Trust-Frameworks nehmen niemals an, dass eine Identität vertrauenswürdig ist, und erfordern immer eine Bestätigung, bevor der Zugriff auf das Netzwerk gestattet wird. Zero-Trust-Sicherheit ist ein softwaredefiniertes Modell, das ständig weiterentwickelt wird, um Anwendungen und vertrauliche Daten zu schützen - unabhängig vom Nutzer, Gerät oder Standort.

Werden beispielsweise Applikationen mit einem Zero-Trust-Policy-Enforcement-Punkt (ZT-PEP) geschützt, wird ein jeweiliger Vertrauensstatus eines Clients und seines Benutzers zusammen mit weiteren Bedrohungs- und Risikoindikatoren erfasst. Diese Attribute werden geeignet kombiniert und über eine mathematische und/oder logische Formel zu einem Zahlenwert berechnet, der sogenannte "Trust-Score". Dieser "Trust-Score" kann an die Applikation übermittelt und von der Applikation ausgewertet werden. Wird er zur Autorisierung des Zugriffs verwendet, kann, insbesondere in Abhängigkeit des Trust-Scores, der Zugriff mit der entsprechenden Berechtigung gewährt werden. Zur Übermittlung des Status werden üblicherweise vom "Authorisation-Service" des "Policy-Enforcement-Punkts" zeitlich begrenzte Zertifikate oder OAuth-/JSON-Webtoken erstellt, welche den Trust-Score und weitere für die Applikation relevante Informationen enthalten.

Die angefragte und durch den Policy-Enforcement-Punkt geschützte Applikation kann hierbei Zugriffsrechte lediglich auf Basis des Trust-Scores zuweisen, hat jedoch keinerlei Information, wie sich dieser zusammensetzt. Ein Trust-Score wird hierbei aus unterschiedlichen Parameterinformationen des Clients zusammengesetzt. Hierbei fließen beispielsweise die Stärken der Authentisierung (ein Faktor oder zwei Faktoren), das Betriebssystem des Clients, der Patch-Stand des Geräts oder die Lokation des Geräts (zum Beispiel abgesichertes Netzwerksegment oder direkte Verbindung aus dem Internet) ein. Auch die aktuelle, globale Bedrohungslage, bekannte Schwachstellen vom Kommunikations-Protokoll oder Heuristiken, wie zum Beispiel über Menge und Regelmäßigkeit des Netzwerkverkehrs, können in die Berechnung des Trust-Scores einfließen. Wie bei einer Hash-Funktion, ist der Anteil bestimmter Benutzerparameter (die für die Berechtigung zum Zugriff auf eine Ressource entscheidend sind) am Gesamtscore, der den Zugriff über das Netz erlaubt, nicht mehr ersichtlich oder herausrechenbar.

Bei der Autorisierung an einen auf einem Server betriebenen Dienst entsteht nun das Problem, dass dieser zur Autorisierung lediglich den Trust-Score verwenden kann, nicht jedoch eigenständig granulare Zugriffsrechte auch gegenüber der Applikation gestarteten Anwendungen zuweist, die auf einen oder mehrere Aspekte der vom Zero-Trust-Policy-Enforcement-Punkt ermittelten Eigenschaft basiert und diese somit eigenständig umpriorisieren kann.

Bei Remote-Zugriffen, wie zum Beispiel über Secure-Shell oder über Remonte-Desktop-Verbindungen wird lediglich eine Überprüfung durchgeführt, ob die Anmeldung erlaubt wird oder nicht und nach erfolgter Anmeldung die statisch dem Benutzerkonto zugewiesenen Berechtigungen verwendet werden. Dabei können die Berechtigungen innerhalb einer Session beziehungsweise während der Nutzung einer startbaren Applikation nicht dynamisch zugewiesen werden.

Bei Remotezugriffslösungen, wie sie beispielsweise von der Firma "CITRIX" bereitgestellt werden, wäre es möglich, dass durch den Zero-Trust-Policity-Enforcement-Punkt dem zugehörigen CITRIX-Login-Portal abhängig vom Score der Zugriff für die authentisierten Benutzer auf einzelne Applikationen ermöglicht wird. Sobald jedoch eine Remote-Session zugelassen ist, kann diese nur beschränkt werden, indem einzelne zu schützende, innerhalb der Session aufgerufenen Applikationen ebenfalls eine Authentisierung an einen Zero-Trust-Policy-Enforcement-Punkt anfordern und der ursprüngliche Kontext des initialen Clients bei der Autorisierung durch die Applikation nicht oder nicht vollumfänglich berechtigt werden kann.

Bekannt ist des Weiteren bei Remote-Access-Lösungen, wie SSH, ein sogenanntes SSH-Agent-Forwarding. Hierbei wird für die Anmeldung an dem ersten Server der SSH-Key für die Anmeldung an nachgelagerten Servern verwendet, indem durch das Protokoll ein transitiver Zugriff auf den ursprünglichen Authentisierungsagenten unterstützt wird.

Ein Nachteil bei den genannten Möglichkeiten ist vor allem der, dass die Zuweisung von Berechtigungen beim Zugriff statisch erfolgt.

Somit besteht eine Aufgabe der vorliegenden Erfindung darin, den Zugriff beziehungsweise mehrere Zugriffe auf eine Applikation oder Applikationen dynamischer verwalten beziehungsweise anpassen zu können.

Diese Aufgabe wird durch mehrere Verfahren, ein Computernetzwerk-System, ein Computerprogrammprodukt sowie einen elektronisch lesbaren Datenträger gemäß den unabhängigen Patentansprüchen gelöst. Sinnvolle Weiterbildungen ergeben sich aus den abhängigen Patentansprüchen.

Ein Aspekt der Erfindung betrifft ein Verfahren zum Durchführen eines Autorisierungsvorgangs einer Client-Anwendung in einem Computernetzwerk-System, wobei
- ein individuelles Vertrauensmaß der Client-Anwendung mit einer Authentisierungsanwendung generiert wird,
- eine Kontextinformation zu der Client-Anwendung von der Authentisierungsanwendung generiert wird,
- in Abhängigkeit von der Kontextinformation und dem Vertrauensmaß eine Zugriffsinformation der Client-Anwendung für ein Anwendungsprogramm des Computernetzwerk-Systems bestimmt wird.

Insbesondere handelt es sich bei dem vorgeschlagenen Verfahren um ein computerimplementiertes Verfahren. Insbesondere kann es sich bei dem Verfahren um eine Cloud-basierte Anwendung handeln.

Durch das vorgeschlagene Verfahren können Zugriffe beziehungsweise Zugriffsrechte für einen Client beziehungsweise Client-Anwendung und dessen Benutzer dynamischer verwaltet werden. Somit können anhand der verschiedensten Informationen, welche durch die Kontextinformation beispielsweise bereitgestellt werden, die verschiedensten Zugriffe für die Client-Anwendung freigegeben, gesperrt oder teilweise eingeschränkt werden. Folglich erfolgt ein sicherer, kontrollierter und angepasster Zugriff.

Mithilfe der bestimmten beziehungsweise generierten Zugriffsinformation kann also ein dynamischer Zugriff der Client-Anwendung auf das Anwendungsprogramm stattgegeben beziehungsweise freigegeben werden. Insbesondere können mithilfe der Zugriffsinformation Zugriffsrechte für die Client-Anwendung erzeugt werden. Insbesondere ermöglicht das vorgeschlagene Verfahren die Zuweisung kontextbezogener Zugriffsrechte für Applikationen und/oder nachgelagerte Applikationen im Zero-Trust-Umfeld.

Durch das vorgeschlagene Verfahren kann erreicht werden, dass Berechtigungen auf einer Plattform und/oder einem Computernetzwerk-System auch für Applikationen, die keine Netzwerk-Anmeldung erfordern, Session-bezogen beschränkt werden. Bei einer Anmeldung an beispielsweise Services, die über das Netzwerk beziehungsweise Computernetzwerk-System erreichbar sind, ist es möglich, den Kontext der vorgelagerten Systeme beziehungsweise das Anwendungsprogramm mit zu berücksichtigen. Auf dem Computernetzwerk-System beziehungsweise System können lokale Serverdienste, wie Container-Laufzeitumgebungen und lokale Datenbanken, kontextabhängig eingeschränkt werden. Bei Shell-Zugriffen kann auch ein kontextbezogenes Applikationswhitelisting ("Application Whitelisting") durchgeführt werden. Mithilfe der Zugriffsinformation können dem Anwendungsprogramm beziehungsweise einer Applikation zur Autorisierung der Client-Anwendung, insbesondere genauere, Kontextinformationen geliefert werden, welche diese dann zur Erteilung von Zugriffsrichten für das Anwendungsprogramm und/oder weiteren Anwendungsprogrammen und/oder Applikationen verwenden können.

Als Anwendungsbeispiel kann hierbei der Remote-Zugriff auf eine Admin-Konsole per "Secure-Shell" (SSH) auf einen aus dem Internet erreichbaren Server oder einem beispielsweise industriellen Steuerungsgerät erwähnt werden. Erfolgt auf dem Gerät eine Anmeldung aufgrund des zugewiesenen Trust-Scores, also dem Vertrauensmaß, des vom Policy-Enforcement-Punktes verwendeten Autorisation-Servers, wird entschieden, ob ein Benutzer sich mithilfe des Benutzerkontos anmelden darf oder nicht. Anschließend wird die erlaubte Applikation bzw. das Anwendungsprogramm (in diesem Fall zum Beispiel eine Log-in-Shell) gestartet, die jedoch die Kontextinformationen nicht weiter ausnutzt, sondern statisch dem zugewiesenen Account zugewiesen. Somit können die Zugriffsrechte der Shell nicht in Abhängigkeit des Trust-Scores beziehungsweise der Prozessberechtigung abgestuft werden.

Beispielsweise kann das Anwendungsprogramm als Datenbank ausgebildet sein oder zumindest auf eine Datenbank zugreifen. Hierbei kann mithilfe der Zugriffsinformation kontextabhängig der Zugriff auf einzelne Tabellen oder Spalten in der Datenbank in Abhängigkeit der Kontextinformationen beziehungsweise Anmeldungs-Kontexte reglementiert beziehungsweise eingeschränkt werden.

Mittels der Zugriffsinformation können beispielsweise auf einem System, wie beispielsweise das Computernetzwerk-System, von einem Zero-Trust-Policy-Enforcement-Punkt zugewiesene Trust-Informationen, wie beispielsweise das Vertrauensmaß, an auf einem anderen System betriebene Applikationen weitergegeben werden. Somit können bei einem industriellen Steuerungsgerät nicht nur die Zugriffsberechtigungen der Admin-Konsole (Shell-Zugriff per SSH) beschränkt werden, sondern beispielsweise auch ein angemeldeter Benutzer, beispielsweise abhängig von seiner Lokation, abgestuft Zugriff auf eine darauf betriebene Docker-Laufzeitumgebung erhalten. Ein Anwendungsfall wäre hierzu beispielsweise, dass bei einer Anmeldung beziehungsweise einem Login aus einem unsicheren Netz beziehungsweise Netzwerk nur Zugriff auf den Status der Container beziehungsweise Daten-Container ermöglicht wird und bei Zugriff aus einem besser gesicherten Netzwerk die auf der Container-Laufzeitumgebung betriebenen Containerinstanzen auch gestartet und gestoppt werden können.

Insbesondere ist das vorgeschlagene Verfahren bei Remote-Verbindungen beziehungsweise Remote-Anwendungen vorteilhaft. Hierbei kann insbesondere eine Cyber-Sicherheit beziehungsweise IT-Sicherheit verbessert werden.

Als eine Client-Anwendung beziehungsweise ein Client, Clientseitige Anwendung, Client-Anwendung oder Client-Programm wird ein Computerprogramm bezeichnet, das auf einem Endgerät eines Netzwerkes, beispielsweise eines Multinetzwerk-Systems, ausgeführt wird und mit einem Server beziehungsweise Zentralrechner des Computernetzwerk-Systems kommuniziert. Insbesondere wird die Client-Anwendung auf einer Recheneinheit beziehungsweise einem Endgerät von einem Benutzer ausgeführt.

Die Authentisierungsanwendung kann beispielsweise als Authentisierungsservice bezeichnet werden. Diese kann wiederum in einer zentralen Recheneinheit des Computernetzwerk-Systems implementiert sein. Mithilfe der Authentisierungsanwendung, welche auf einer Recheneinheit ausgeführt wird, kann das individuelle Vertrauensmaß beziehungsweise Vertrauenswürdigkeitsmaß generiert beziehungsweise erzeugt werden. Bei dem Vertrauensmaß kann es sich um den bereits eingangs erwähnten "Trust-Score" handeln.

Mithilfe der Kontextinformation können weitere zusätzliche Informationen bereitgestellt werden. Somit liefern die Kontextinformationen ausgehend von dem Vertrauensmaß weitere Informationen, sodass eine Informationserweiterung durchgeführt werden kann. Beispielsweise kann es sich bei der Kontextinformation um eine Client-spezifische Information, mit welcher die Client-Anwendung charakterisiert werden kann, handeln. Beispielsweise kann durch die Authentisierungsanwendung und/oder einer Recheneinheit die Zugriffsinformation abhängig von der Kontextinformation und dem Vertrauensmaß bestimmt beziehungsweise generiert werden. Somit erfolgt eine Verknüpfung des Vertrauensmaßes mit der Kontextinformation. Dies kann für den späteren Zugriff beziehungsweise für das Verwalten der Zugriffsrechte verwendet werden.

Das Computernetzwerk-System kann beispielsweise als Rechnernetz, Computernetz oder Computernetzwerk bezeichnet werden. Beispielsweise kann das Computernetzwerk-System einen Zentralrechner oder Hauptrechner aufweisen. Ein solcher Zentralrechner kann den angeschlossenen Rechnern (Arbeitsplatzrechner oder Terminals) die darauf betriebenen Programme, Dienste, Systemprogramme oder Anwendungsprogramme zur Verfügung stellen.

In einem Ausführungsbeispiel der vorliegenden Erfindung ist des Weiteren vorgesehen, dass die Client-Anwendung auf einem Endgerät des Computernetzwerk-Systems ausgeführt wird, wobei für das Generieren des Vertrauensmaßes eine Eigenschaft des Endgeräts und/oder eine Eigenschaft der Client-Anwendung und/oder eine Benutzerinformation eines Benutzers der Client-Anwendung und/oder eine Eigenschaft einer Kommunikationsverbindung zwischen dem Endgerät und dem Computernetzwerk-System berücksichtigt wird. Insbesondere können die soeben aufgezählten Eigenschaften und/oder Informationen dazu verwendet werden, um das Vertrauensmaß bzw. "Trust Score" zu generieren. Insbesondere können diese Informationen und/oder Eigenschaften der Authentisierungsanwendung zur Verfügung gestellt werden, beispielsweise die genannten Eigenschaften und/oder Informationen dem eingangs genannten Zero-Trust-Policy-Enforcement-Punkt zur Verfügung gestellt werden. Dieser wiederum kann diese Informationen der Authentisierungsanwendung zur Verfügung stellen beziehungsweise übermitteln, sodass in Abhängigkeit der verschiedensten Informationen, Eigenschaften und/oder Parameter ein jeweils individuelles Vertrauensmaß für eine Client-Anwendung generiert werden kann. Bei dem Vertrauensmaß handelt es sich um einen Zero-Trust-Score.

Insbesondere können für das Generieren des Vertrauensmaßes die verschiedensten Informationen und/oder Eigenschaften und/oder Bedrohungsindikatoren und/oder Risikoindikatoren oder eine Lokation des Endgeräts und/oder die verschiedensten Parameterinformationen berücksichtigt werden. Insbesondere kann für die Berechnung des Vertrauensmaßes die Stärke der Authentisierung, einem Betriebssystem des Endgeräts, dem Patch-Standard des Endgeräts, der Lokation des Endgeräts, bekannte Schwachstellen von Protokollen oder Heuristiken der Kommunikationsverbindung und/oder beliebig anderweitig vorhandene, insbesondere situationsabhängige, Einflussfaktoren berücksichtigt werden. Somit kann eine für die Client-Anwendung passende und insbesondere situationsangepasste Zugriffsinformation später generiert werden.

Beispielsweise kann die Zugriffsinformation als Authentisierungsinformation bezeichnet werden.

Zusätzlich oder stattdessen kann der beispielsweise von dem Zero-Trust-Policy-Enforcement-Punkt in der von der Authentisierungsanwendung abgefragten und einem Request zugewiesenen Authentisierungsinformation beziehungsweise Authentisierungsinformation zusätzlich die Kontextinformation zugewiesen werden. Beispielsweise kann das Vertrauensmaß als Zertifikat, signiertes OAuth-Token (Token eines Open Authorisation Protocols) oder eines JSON-Web-Token (Java-Script-Object-Notation-Token).

In einem Ausführungsbeispiel ist vorgesehen, dass in Abhängigkeit von der Zugriffsinformation ein Zugriff auf das Anwendungsprogramm gestattet wird, wobei abhängig von der Kontextinformation zusätzlich ein Zugriff der Client-Anwendung auf zumindest ein Unterprogramm des Anwendungsprogramms und/oder zumindest eine Funktion des Anwendungsprogramms gestattet wird. Folglich kann ein kontextabhängiger, insbesondere dynamischer, Zugriff auf die verschiedensten Anwendungsprogramme und insbesondere Applikationen der Client-Anwendung ermöglicht beziehungsweise bereitgestellt werden. Anhand der einmal erzeugten Zugriffsinformation können also der Client-Anwendung neben der Hauptanwendung (Anwendungsprogramm) weitere Unteranwendungen (Unterprogramme) Zugriff ermöglicht werden. Dadurch können den einmaligen Autorisierungsvorgang der Client-Anwendung mehrere Zugriffe beziehungsweise Zugriffsrechte auf verschiedene Funktionen, Anwendungen und/oder Applikationen bereitgestellt werden. Somit können der Client-Anwendung und somit dem dahinterstehenden Benutzer effizient und auf einfache Art und Weise mehrere kontextabhängige Zugriffe zur Verfügung gestellt werden. Bei einem Zugriff der Client-Anwendung auf die verschiedensten Programme beziehungsweise Anwendungen muss also nicht jeweils ein eigenständiger separater Autorisierungsvorgang beziehungsweise Zugriffsvorgang durchgeführt werden. Dies erfolgt mithilfe der generierten Zugriffsinformation bei einem Hauptzugriff auf das Anwendungsprogramm.

Mit anderen Worten ausgedrückt kann mithilfe der Zugriffsinformation der Client-Anwendung verschiedene beziehungsweise unterschiedliche Zugriffsrechte beziehungsweise Privilegien auf die verschiedensten Anwendungsprogramme und/oder Funktionen zur Verfügung gestellt werden. Hierbei kann des Weiteren für ein jeweiliges Anwendungsprogramm und/oder Unterprogramm und/oder Funktion ein individueller Zugriff freigegeben oder eingeschränkt werden. Beispielsweise kann die Client-Anwendung auf dem Anwendungsprogramm ein größeres Zugriffsrecht beziehungsweise ein größeres Maß an Zugriffen zur Verfügung gestellt werden als in den nachgelagerten beziehungsweise untergeordneten Unterprogrammen des Anwendungsprogramms. Somit können sicherheitskritische und/oder datenschutzkritische Funktionen und/oder Unterprogramme bezüglich des Anwendungsprogramms situationsabhängig beziehungsweise spezifisch eingeschränkt werden.

In einem Ausführungsbeispiel ist des Weiteren vorgesehen, dass abhängig von der Kontextinformation bei dem Zugriff auf das Anwendungsprogramm ein Funktionsumfang, ein Zugriffsrecht, ein Programmumfang, eine Anzahl an zugriffsberechtigten Unterprogrammen und/oder Funktionen, eine Anwendungsdauer, ein Lesezugriff und/oder ein Schreibzugriff für das zumindest eine Unterprogramm und/oder die zumindest eine Funktion der Anwendung bestimmt wird. Somit erfolgt eine dynamische Zuteilung von Zugriffs-Ausführungen für die Client-Anwendung beziehungsweise den Client. Dementsprechend kann also anhand der verschiedensten Kontextinformationen ein an den Client angefertigtes Zugriffs-Modell beziehungsweise Zugriffsmöglichkeiten bereitgestellt werden. Durch die Kontextinformation kann der Client-Anwendung beispielsweise individuell, situativ und/oder Client-spezifisch Zugriffsarten beziehungsweise Zugriffsumfänge bezüglich des zumindest einen Unterprogramms (oder mehreren Unterprogrammen) und/oder der zumindest einen Funktion (können auch mehrere Funktionen sein) des Anwendungsprogramms. Somit kann, je nachdem, um welche Client-Anwendung es sich handelt und insbesondere welche Kontextinformationen der Client-Anwendung zugeordnet wurden, eine Anwendungsmöglichkeit bezüglich des Anwendungsprogramms, der Unterprogramme des Anwendungsprogramms und/oder der Funktionen des Anwendungsprogramms zugeschnitten werden. Folglich erfolgt beim Zugriff auf das Anwendungsprogramm durch die Client-Anwendung eine Festlegung des Zugriffs, Zugriffsumfangs und/oder Zugriffsberechtigung an allen Funktionen des Anwendungsprogramms und aller Unterprogramme beziehungsweise nebengeordneten Programmen und/oder Applikationen des Anwendungsprogramms.

In einem Ausführungsbeispiel ist vorgesehen, dass in einer Richtlinien-Datenbank eine Richtlinie für die Authentisierungsanwendung bereitgestellt wird, wobei abhängig von mindestens einem Vertrauenskriterium, welches in der Richtlinie hinterlegt ist, das individuelle Vertrauensmaß der Client-Anwendung mit der Authentisierungsanwendung generiert wird. Mithilfe der Richtlinie beziehungsweise Richtlinien und des darin hinterlegten Vertrauenskriterium oder mehreren Vertrauenskriterien können je nach Anwendungsfall und/oder nach Gegebenheiten beziehungsweise einer jeweiligen Situation das Vertrauensmaß der Client-Anwendung individuell und situationsangepasst generiert werden.

In der Richtlinie können beispielsweise Vorgaben beziehungsweise Regeln hinterlegt sein, welche insbesondere der IT-Sicherheit des Computernetzwerk-Systems entsprechen. Somit kann hier bereits im Vorfeld festgelegt werden, welches Maß beziehungsweise welche Qualität die IT-Sicherheit beziehungsweise Sicherheit das Computernetzwerk-System vorgibt. Dies kann bereits im Vorfeld berücksichtigt werden, sodass jeder Client-Anwendung, welche sich in dem Computernetzwerk-System autorisieren möchte, im Vorfeld entsprechend sicherheitsrelevant eingestuft werden kann.

Mit dem Vertrauenskriterium kann beispielsweise ein Trust-Kriterium für die Client-Anwendung bereitgestellt werden und dies bei der Generierung des Vertrauensmaßes berücksichtigt werden.

Mithilfe der Richtlinie und insbesondere des in der Richtlinie hinterlegten Vertrauenskriteriums kann eine, insbesondere sicherheitsrelevante, Gewichtung beziehungsweise Bewertung der Client-Anwendung erfolgen.

Insbesondere ist die Richtlinien-Datenbank beispielsweise Bestandteil des Computernetzwerk-Systems. In einem Ausführungsbeispiel ist vorgesehen, dass das Vertrauensmaß von der Authentisierungsanwendung als Zertifikat signiert wird, wobei dieses signierte Zertifikat der Client-Anwendung zugewiesen wird. Somit kann beispielsweise ein jeweils individueller Trust-Score beziehungsweise Vertrauensmaß eindeutig der Client-Anwendung zugewiesen werden. Dies ist dann von Vorteil, um eine eindeutige Autorisierung beziehungsweise einen Autorisierungsvorgang der Client-Anwendung hinsichtlich des Anwendungsprogramms durchzuführen. Das Anwendungsprogramm kann somit eindeutig die Client-Anwendung identifizieren und das zu der Client-Anwendung zugeordnete Vertrauensmaß bei der Bestimmung der Zugriffsinformation und somit des Zugriffes berücksichtigen.

Speziell kann das Vertrauensmaß auch in anderen, insbesondere proprietären, Formate erzeugt bzw. signiert werden.

Insbesondere erfolgt das Signieren erst nach Prüfung der Authentizität des Vertrauensmaßes, sodass das Erzeugen des Vertrauensmaßes nicht manipuliert werden kann.

Beispielsweise kann das Vertrauensmaß als Zertifikat oder als Token generiert und signiert werden. Somit kann durch das signierte Zertifikat eine eindeutige Zuordnung des Vertrauensmaßes beziehungsweise des Trust-Scores für die Client-Anwendung erfolgen.

In einem Ausführungsbeispiel ist vorgesehen, dass abhängig von der bestimmten Zugriffsinformation eine Sitzung der Client-Anwendung auf dem Anwendungsprogramm durchgeführt beziehungsweise gestartet wird, wobei innerhalb dieser Sitzung eine jeweils aktuelle Kontextinformation dynamisch festgestellt wird und eine dynamische Zuteilung von Zugriffsrechten der Client-Anwendung für Unterprogramme und/oder Funktionen des Anwendungsprogramms in Abhängigkeit von den jeweils festgestellten aktuellen Kontextinformationen durchgeführt wird. Dies hat den Vorteil, dass während einer bereits vorliegenden beziehungsweise gestarteten Sitzung der Client-Anwendung auf dem Anwendungsprogramm der Funktionsumfang beziehungsweise die Anwendungsmöglichkeiten der Client-Anwendung auf Unterprogramme und/oder auf Funktionen des Anwendungsprogramms dynamisch verändert beziehungsweise angepasst werden kann. Somit erfolgt eine dynamische Zuteilung beziehungsweise ein dynamisches Anpassen der Zugriffsrechte der Client-Anwendung auch während des bereits erstatteten Zugriffs der Client-Anwendung auf das Anwendungsprogramm.

Beispielsweise können hierfür Kontextinformationen erneut zur Verfügung gestellt werden oder Kontextinformationen aktualisiert werden. Somit kann auf intelligente Art und Weise der Zugriff der Client-Anwendung hinsichtlich des Anwendungsprogramms und der darunter stehenden Funktionen oder Unterprogrammen jederzeit korrigiert beziehungsweise eingeschränkt oder erweitert werden. Infolgedessen kann insbesondere bei Feststellung, dass beispielsweise aufgrund von aktuellen Gegebenheiten die Sicherheit des Anwendungsprogramms und insbesondere des Computernetzwerk-Systems nicht mehr vollumfänglich gegeben ist, die Zugriffe für die Client-Anwendung eingeschränkt werden.

Bei einer Sitzung handelt es sich um eine stehende Verbindung eines Clients mit einem Server beziehungsweise dem Computernetzwerk-System. Am Anfang einer solchen Sitzung erfolgt ein Login, also der Autorisierungsvorgang, und am Ende erfolgt ein Logout beziehungsweise Logout-Vorgang.

Unter einem Anwendungsprogramm ist eine Anwendungssoftware oder Computerprogramm zu verstehen.

In einem Ausführungsbeispiel ist des Weiteren vorgesehen, dass eine Vertrauenswürdigkeits-Liste mit Kontextinformationswerten und Vertrauensmaßwerten bereitgestellt wird, wobei in der Client-Anwendung mit der Vertrauenswürdigkeits-Liste Zugriffsrechte auf das Anwendungsprogramm und/oder weitere Anwendungsprogramme zugewiesen werden. Durch eine solche Vertrauenswürdigkeits-Liste können bereits Voreinstellungen beziehungsweise vorgegebene Zugriffsrechte zu der Client-Anwendung zugewiesen beziehungsweise zugeordnet werden. Somit kann der Client-Anwendung bereits eine Art Grund-Zugriffsmöglichkeit beziehungsweise Grund-Zugriffsrechte zugewiesen werden. Dies kann insbesondere bei der Generierung beziehungsweise Bestimmung der Zugriffsinformation berücksichtigt werden.

Insbesondere können also bestimmte Werte bezüglich der Kontextinformation und Werte bezüglich des Vertrauensmaßes in einer speziellen Liste beziehungsweise Tabelle vordefiniert werden. Dies kann beispielsweise durch die Authentisierungsanwendung erfolgen.

Beispielsweise kann es sich bei der Vertrauenswürdigkeits-Liste um eine Ausnahmeliste (z.B. "Deny-Liste oder "Blacklist"), weiße Liste oder um ein "Application Whitelisting" (z.B. Allow Liste) handeln.

In einem Ausführungsbeispiel ist vorgesehen, dass die Zugriffsinformation auf Basis eines Stellenwert-Systems codiert wird. Somit kann durch die Authentisierungsanwendung eine datentechnische Form für die Zugriffsinformation generiert und bereitgestellt werden. Dies kann an die jeweiligen Anwendungen, Systeme und/oder Computerprogramme übertragen werden. Insbesondere kann die Zugriffsinformation auf Basis eines Dualsystems, Binärsystems, Dezimalsystems oder Hexadezimalsystems erfolgen. Ebenso sind weitere bekannte Stellenwert-Systeme aus der Informationstechnik anwendbar.

Beispielsweise können über eine geeignete Maske alle Attribute, die zur Autorisierung beziehungsweise Authentisierung genutzt und zusammengeführt wurden, mithilfe des Stellenwert-Systems rekonstruiert werden. Dies ist bei der eindeutigen und insbesondere sicherheitskritischen Autorisierung der Client-Anwendung von Bedeutung.

Ein weiterer Aspekt der Erfindung betrifft ein Verfahren zum Ausführen eines Anwendungsprogramms, bei dem sich eine Client-Anwendung entsprechend einem Verfahren nach einem der vorhergehenden Aspekte oder einer vorteilhaften Weiterbildung davon autorisiert. Der Client-Anwendung wird entsprechend der Zugriffsinformation Zugriff auf das Anwendungsprogramm gestattet. Insbesondere können vorteilhafte Ausführungen des vorherigen Aspekts als vorteilhafte Ausführungen des vorliegenden Verfahrens betrachtet werden.

Insbesondere kann nach der Generierung der Zugriffsinformation ein Zugriffsvorgang beziehungsweise Autorisierungsvorgang der Client-Anwendung auf dem Anwendungsprogramm durchgeführt werden. Hierzu wird von dem Anwendungsprogramm die Zugriffsinformation entsprechend analysiert und bewertet, sodass ein entsprechender Zugriff und insbesondere entsprechende Zugriffsrechte der Client-Anwendung freigegeben oder beschränkt werden können.

In einem Ausführungsbeispiel des weiteren Aspekts ist vorgesehen, dass die Zugriffsinformation zusätzlich mit mindestens einem Attribut versehen wird und in einer Attribut-Datenbank des Anwendungsprogramms gespeichert wird. Dies erfolgt insbesondere bei dem Zugriffsvorgang beziehungsweise bei einem Anmeldevorgang beziehungsweise Login-Vorgang der Client-Anwendung auf dem Anwendungsprogramm. Beispielsweise kann bei der Generierung der Zugriffsinformation zumindest ein zusätzliches Attribut oder mehreren Attribute zu der Zugriffsinformation hinzugefügt werden. Bei einem gestatteten Zugriff der Client-Anwendung auf dem Anwendungsprogramm können automatisch das zumindest eine Attribut in der Attribut-Datenbank gespeichert beziehungsweise zwischengespeichert werden. Insbesondere kann das zumindest eine Attribut für die dynamische Zuordnung von Zugriffsrechten während des bereits gestatteten Zugriffs auf das Anwendungsprogramm verwendet werden.

In einem Ausführungsbeispiel des weiteren Aspekts ist vorgesehen, dass abhängig von dem gespeicherten Attribut ein spezieller Zugriff der Client-Anwendung auf ein Unterprogramm und/oder eine Funktion des Anwendungsprogramms bestimmt wird. Somit können nachgelagerte Funktionen und/oder untergeordnete Unterprogramme des Anwendungsprogramms ohne einen speziellen eigenen Zugriff eingeschränkt oder freigegeben werden für die Nutzung der Client-Anwendung.

Insbesondere kann das gespeicherte Attribut in einer aktuellen Sitzung, also sitzungs-bezogen, der Client-Anwendung hinsichtlich des Anwendungsprogramms verwendet werden. In einem erneuten Zugriffsvorgang oder beim Starten einer neuen beziehungsweise einer weiteren Sitzung kann das gespeicherte Attribut insbesondere nicht mehr verwendet werden. Insbesondere ist dies bei dem gestatteten Zugriff und somit bei einer gestarteten Sitzung des Anwendungsprogramms verwendbar.

Ein weiterer Aspekt der Erfindung betrifft ein Computernetzwerk-System mit einer Client-Einheit zum Ausführen einer Client-Anwendung und einer Servereinheit zum Ausführen einer Authentisierungsanwendung und eines Anwendungsprogramms. Das Computernetzwerk-System ist ausgebildet, um ein Verfahren nach einem der vorhergehenden Aspekte oder einer vorteilhaften Ausführung zumindest einer der genannten Aspekte auszuführen.

Insbesondere wird ein Verfahren gemäß den vorher genannten Aspekten oder einer vorteilhaften Weiterbildung aus einem dieser Aspekte durchgeführt beziehungsweise ausgeführt.

Bei dem Computernetzwerk-System kann es sich um ein Rechennetz, Computernetz oder Computernetzwerk handeln. Beispielsweise kann es sich bei dem Computernetzwerk-System um ein industrielles System, wie eine Verarbeitungsstraße, Verarbeitungsprozess, Fließbandfertigungsanlage, Herstellungsvorrichtungen oder um ein Firmennetzwerk handeln.

Insbesondere handelt es sich bei der Client-Einheit um eine Recheneinheit. Bei der Servereinheit handelt es sich beispielsweise um einen lokalen, zentralen oder dezentralen Server. Insbesondere kann es sich bei der Servereinheit um eine Cloud-basierte Einheit handeln.

Bei dem Computernetzwerk-System kann es sich ebenfalls um ein Cloud-basiertes System handeln.

Ein weiterer Aspekt der Erfindung betrifft ein Computerprogrammprodukt, welches direkt in einen Speicher einer Steuereinrichtung eines Computernetzwerk-Systems nach dem vorherigen Aspekt ladbar ist, mit Programm-Mitteln, um das Verfahren nach einem der vorhergehenden Aspekte oder einer vorteilhaften Weiterbildung daraus auszuführen, wenn das Programm in einer Steuereinrichtung eines Computernetzwerk-Systems ausgeführt wird.

Ein weiterer Aspekt der Erfindung betrifft einen elektronisch lesbaren Datenträger mit darauf gespeicherten elektronisch lesbaren Steuerinformationen, welche derart ausgestaltet sind, dass sie bei Verwendung des Datenträgers in einer Steuereinrichtung eines Computernetzwerk-Systems nach einem der vorhergehenden Aspekte ein Verfahren nach einem der vorhergehenden Aspekte oder einer vorteilhaften Weiterbildung daraus durchführen. Beispielsweise kann es sich bei dem Computernetzwerk-System um eine Cloud-basierte Technologie handeln.

Ausführungsbeispiele eines Aspekts sind als vorteilhafte Ausführungsbeispiele der anderen Aspekte und umgekehrt anzusehen.

Vorteilhafte Ausgestaltungsformen des Verfahrens sind als vorteilhafte Ausgestaltungsformen des weiteren Verfahrens, des Computernetzwerk-Systems, des Computerprogrammprodukts sowie des elektronisch lesbaren Datenträgers anzusehen. Das Computernetzwerk-System, das Computerprogrammprodukt und der elektronisch lesbare Datenträger weisen gegenständliche Merkmale auf, welche eine Durchführung eines der Verfahren oder einer vorteilhaften Ausgestaltungsform davon ermöglichen.

Unter einer Recheneinheit, wie beispielsweise eine Client-Einheit, ein Endgerät oder einer Servereinheit, kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "lookup table"), durchzuführen.
Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere digitale Signalprozessoren, DSP, enthalten. Die Recheneinheit kann auch einen physischen oder einen virtuellen Verbund von Computern oder sonstigen der genannten Einheiten beinhalten.
In verschiedenen Ausführungsbeispielen beinhaltet die Recheneinheit eine oder mehrere Hardware- und/oder Softwareschnittstellen und/oder eine oder mehrere Speichereinheiten.
Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Sofern nicht anders angegeben, können alle Schritte des, insbesondere computerimplementierten, Verfahrens von mindestens einer Recheneinheit durchgeführt werden, die auch als Datenverarbeitungsvorrichtung bezeichnet werden kann. Insbesondere kann die Datenverarbeitungsvorrichtung, die mindestens eine Verarbeitungsschaltung umfasst, die zur Durchführung eines erfindungsgemäßen, insbesondere computerimplementierten, Verfahrens ausgebildet oder angepasst ist, die Schritte des computerimplementierten Verfahrens durchführen. Hierzu kann in der Datenverarbeitungsvorrichtung insbesondere ein Computerprogramm gespeichert sein, das Anweisungen umfasst, die bei Ausführung durch die Datenverarbeitungsvorrichtung, insbesondere die mindestens eine Verarbeitungsschaltung, die Datenverarbeitungsvorrichtung veranlassen, das computerimplementierte Verfahren auszuführen.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind auch Ausführungen und Merkmalskombinationen als offenbart anzusehen, die nicht alle Merkmale eines ursprünglich formulierten unabhängigen Anspruchs aufweisen und/oder die über die in den Rückbezügen der Ansprüche dargelegten Merkmalskombinationen hinausgehen oder von denen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

Die nachfolgenden Figuren zeigen in:
- FIG 1: eine schematische Darstellung eines Computernetzwerk-Systems; und
- FIG 2: einen schematischen Ablauf eines Ausführungsbeispiels eines erfindungsgemäßen Verfahrens.

In den Figuren sind funktionsgleiche Elemente mit denselben Bezugszeichen versehen.

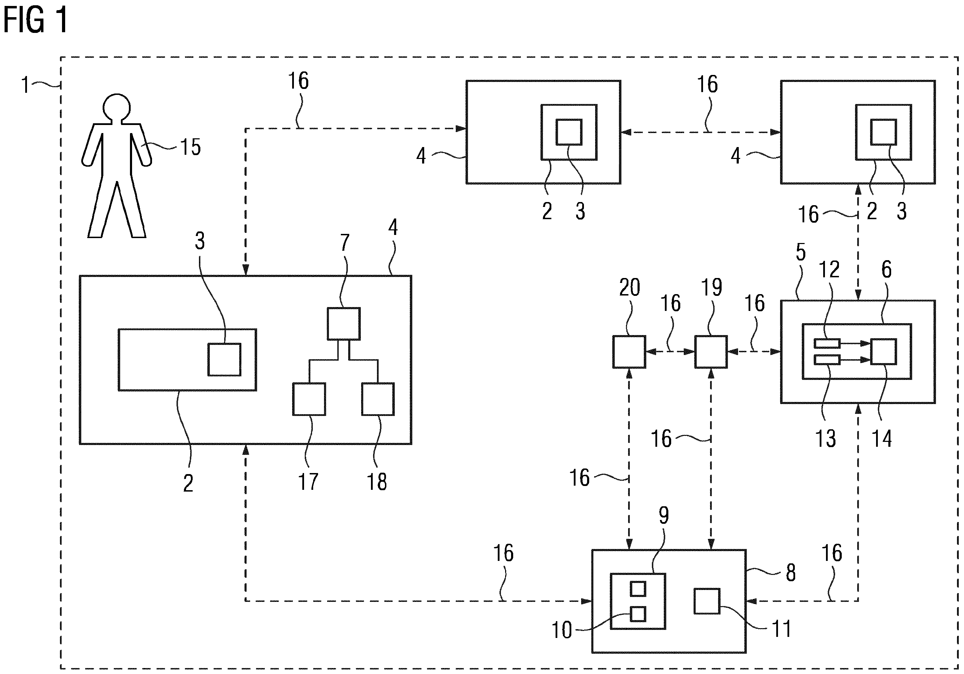

Die FIG 1 zeigt eine beispielhafte Ansicht eines Computernetzwerk-Systems 1. Das Computernetzwerk-System 1, welches beispielsweise ein Rechennetz beziehungsweise ein Datenverarbeitungsnetz ist, kann zumindest eine Client-Einheit 2 zum Ausführen einer Client-Anwendung 3 aufweisen. Beispielsweise kann mit der Client-Einheit 2 mehrere Client-Anwendungen 3 ausgeführt werden. Beispielsweise kann die Client-Anwendung 3 und/oder die Client-Einheit 2 auf einem Endgerät 4 des Computernetzwerk-Systems 1 ausgeführt und insbesondere implementiert sein. In einer möglichen Variante kann die Client-Einheit 2 und das Endgerät 4 als eine Einheit bezeichnet werden. Ebenfalls denkbar ist, dass es sich um separate Einheiten handelt.

Des Weiteren kann das Computernetzwerk-System 1 mehrere Client-Einheiten 2 und insbesondere Endgeräte 4 aufweisen. Beispielsweise kann es sich bei dem Endgerät 4 um eine Recheneinheit handeln. Beispielsweise kann das Computernetzwerk-System 1 mehrere Recheneinheiten aufweisen, welche miteinander kommunikativ vernetzt sein können. Des Weiteren kann das Computernetzwerk-System 1 zumindest eine Servereinheit 5 aufweisen. Mit der Servereinheit 5, welche beispielsweise eine Recheneinrichtung, Recheneinheit oder Cloud-basierte Einheit ist, kann eine Authentisierungsanwendung 6 und ein Anwendungsprogramm 7 ausgeführt werden. Insbesondere kann mit der Servereinheit 5, welche beispielsweise als Zentralrechner beziehungsweise zentrale Recheneinheit des Systems 1 angesehen werden kann, Anwendungsprogramme, Anwendungen, Applikationen oder anderweitige softwarebasierte Systeme ausgeführt werden.

Des Weiteren kann das Computernetzwerk-System 1 eine Steuereinrichtung 8 aufweisen. Diese Steuereinrichtung 8 kann wiederum einen Speicher 9 aufweisen, auf welchem beispielsweise ein Computerprogramm, weiter auch als Computerprogrammprodukt bezeichnet, 10 ladbar ist. Beispielsweise kann das Computerprogrammprodukt 10 Programm-Mittel aufweisen, um eines der erfindungsgemäßen Verfahren oder eine Weiterbildung daraus auszuführen, wenn das Programm 10 in der Steuereinrichtung 8 des Computernetzwerk-Systems 1 ausgeführt wird. Des Weiteren kann ein elektronisch lesbarer Datenträger 11 vorgesehen sein, der gespeicherte elektronisch lesbare Steuerinformationen enthält, welche derart ausgestaltet sind, dass sie bei Verwendung des Datenträgers 11 in der Steuereinrichtung 8 des Computernetzwerk-Systems 1 optional ein erfindungsgemäßes Verfahren ausführen.

Beispielsweise kann die Client-Anwendung 3 einen Autorisierungsvorgang in dem Computernetzwerk-System 1 durchführen. Hierzu kann ein individuelles Vertrauensmaß 12 der Client-Anwendung 3 mit der Authentisierungsanwendung 6 generiert beziehungsweise erzeugt werden. Zusätzlich kann eine Kontextinformation 13 zu der Client-Anwendung 3 von der Authentisierungsanwendung 6 generiert werden. In Abhängigkeit von der Kontextinformation 13 und dem Vertrauensmaß 12 kann eine Zugriffsinformation 14 der Client-Anwendung 3 auf das Anwendungsprogramm 7 bestimmt werden. Mithilfe der Zugriffsinformation 14 kann die Client-Anwendung 3 einen Zugriff auf das Anwendungsprogramm 7 durchführen. Somit wird mithilfe der Bestimmung der Zugriffsinformation 14 ein Autorisierungsvorgang der Client-Anwendung 3 auf das Anwendungsprogramm 7 durchgeführt.

Beispielsweise kann eine Eigenschaft des Endgeräts 4 und/oder der Client-Einheit 2 und/oder eine Eigenschaft der Client-Anwendung 3 und/oder eine Benutzerinformation eines Benutzers 15 der Client-Anwendung 3 und/oder eine Eigenschaft einer Kommunikationsverbindung 16 zwischen dem Endgerät 4 und dem System 1 der Authentisierungsanwendung 6 zur Verfügung gestellt beziehungsweise übermittelt werden, sodass zumindest eine dieser Informationen beziehungsweise Eigenschaften für das Generieren des Vertrauensmaßes 12 berücksichtigt und somit verwendet werden kann. Bei der Kommunikationsverbindung 16 kann es sich beispielsweise um jedwede Kommunikationsverbindung beziehungsweise Datenübertragungsverbindung innerhalb des Computernetzwerk-Systems 1 handeln.

Des Weiteren kann in Abhängigkeit von der Zugriffsinformation 14 ein Zugriff auf das Anwendungsprogramm 7 gestattet werden. Hierbei kann abhängig von der Kontextinformation 13 zusätzlich ein Zugriff der Client-Anwendung 3 auf zumindest ein Unterprogramm 17 des Anwendungsprogramms 7 und/oder zumindest eine Funktion 18 des Anwendungsprogramms 7 gestattet werden. Des Weiteren kann beispielsweise durch die Authentisierungsanwendung 6 und/oder die Servereinheit 5 abhängig von der Kontextinformation 13 beim Zugriff auf das Anwendungsprogramm 7 ein Funktionsumfang, ein Zugriffsrecht, ein Programmumfang, eine Anzahl an zugriffsberechtigten Unterprogrammen und/oder Funktionen, eine Anwendungsdauer, ein Lesezugriff und/oder ein Schreibzugriff für das zumindest eine Unterprogramm 17 und/oder die zumindest eine Funktion 18 des Anwendungsprogramms 7 bestimmt werden.

Des Weiteren kann das System 1 eine Richtlinien-Datenbank 19 enthalten beziehungsweise aufweisen. In dieser können spezielle Richtlinien und/oder Regeln und/oder Vorschriften und/oder Vorgaben für das Generieren des Vertrauensmaßes 12 bereitgestellt werden. Hierzu kann in der Richtlinien-Datenbank 19 zumindest eine Richtlinie für die Authentisierungsanwendung 6 bereitgestellt werden und abhängig von mindestens einem Vertrauens-Kriterium, welches in der Richtlinie hinterlegt ist, das individuelle Vertrauensmaß 12 generiert werden kann.

Des Weiteren kann die Authentisierungsanwendung 6 ausgebildet sein, um in Abhängigkeit von dem Vertrauensmaß 12 ein signiertes Zertifikat zu erzeugen, sodass mithilfe dieses Zertifikats eine eindeutige Zuordnung und insbesondere Identifikation der Client-Anwendung 3 durchgeführt werden kann. Bei einem erfolgreichen gestatteten Zugriff der Client-Anwendung 3 auf das Anwendungsprogramm 7 kann eine Sitzung beziehungsweise Session gestartet beziehungsweise durchgeführt werden. Innerhalb dieser Sitzung kann die Client-Anwendung 3 entsprechend der zugewiesenen Zugriffsrechte das Anwendungsprogramm 7, das zumindest eine Unterprogramm 17 und/oder die zumindest eine Funktion 18 ausführen beziehungsweise anwenden beziehungsweise benutzen. Um eine intelligente und insbesondere dynamisch angepasste Sicherheitsüberprüfung durchführen zu können, kann innerhalb der Sitzung eine jeweils aktuelle Kontextinformation dynamisch festgestellt werden. Dies kann beispielsweise mit der Servereinheit 5 erfolgen. Somit kann eine dynamische Zuteilung von Zugriffsrechten der Client-Anwendung 3 für Unterprogramme 17 und/oder Funktionen 18 in Abhängigkeit von der jeweils festgestellten aktuellen Kontextinformation erfolgen.

Des Weiteren kann vorgesehen sein, dass eine Vertrauenswürdigkeits-Liste beziehungsweise Ausnahmeliste beziehungsweise weiße Liste beziehungsweise Application-White-Liste mit Kontextinformationswerten und Vertrauensmaßwerten bezüglich der Kontextinformation 13 und des Vertrauensmaßes 12 bereitgestellt werden, wobei der Client-Anwendung 3 somit bereits im Vorfeld bestimmte beziehungsweise vorgegebene Zugriffsrechte zugewiesen werden können.

Die Servereinheit 5 kann beispielsweise die Zugriffsinformation 14 derart erzeugen, dass diese auf Basis eines Stellenwert-Systems codiert ist. Dies kann zur datentechnischen Weiterverarbeitung besser genutzt werden.

Beispielsweise kann zusätzlich zu der Kontextinformation 13 mindestens ein Attribut zu der Zugriffsinformation 14 hinzugefügt werden. Bei einem Zugriff der Client-Anwendung 3 auf das Anwendungsprogramm 7 kann dieses zusätzliche Attribut in einer Attribut-Datenbank 20, welche beispielsweise Bestandteil des Anwendungsprogramms 7 ist, gespeichert beziehungsweise zwischengespeichert werden. Dieses wiederum spezielle Attribut kann insbesondere innerhalb der Sitzung dazu verwendet werden, um spezielle Zugriffe der Client-Anwendung 3 auf ein Unterprogramm 17 und/oder eine Funktion 18 des Anwendungsprogramms 7 zu bestimmen.

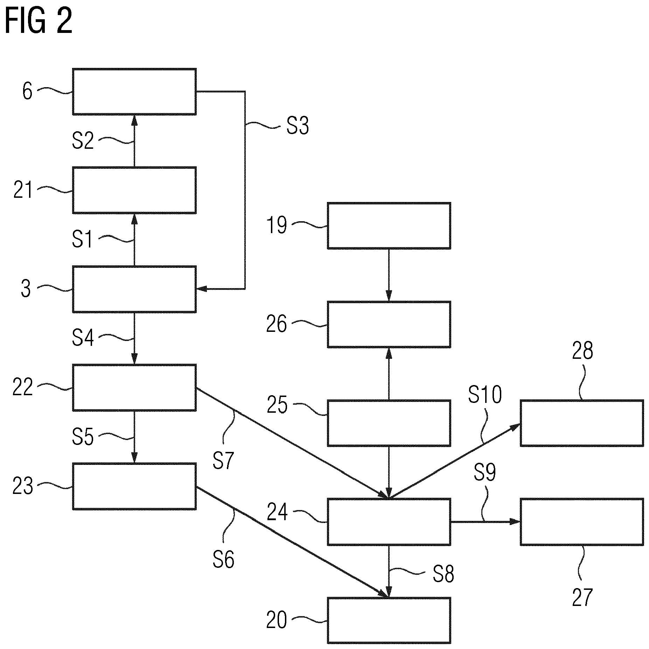

In der FIG 2 wird beispielsweise ein Autorisierungsvorgang beziehungsweise ein Anmeldevorgang mittels SSH (Secure-Shell) erläutert.

Zunächst erfolgt eine Authentisierung der Client-Anwendung 3 an einem Zero-Trust-Policy-Enforcement-Punkt 21. Dies kann in einem beispielhaften ersten Schritt S1 erfolgen. Hierbei können der Client-Anwendung 3 ein spezieller Trust-Score (beispielsweise Vertrauensmaß 12) zugeordnet werden. Beispielsweise kann in einem nachfolgenden zweiten Schritt S2 die Übermittlung des Trust-Scores für die Bildung eines Token beziehungsweise Zertifikats an die Authentisierungsanwendung 6 beziehungsweise Authentisierungsservice übermittelt werden. Die Authentisierungsanwendung 6 kann wiederum die Authentisierung der Client-Anwendung 3 durchführen. Der Zero-Trust-Policy-Enforcement-Punkt 21 kann nach Ermittlung des Trust-Scores (Vertrauensmaß 12) die Richtlinien-Datenbank 19 anfragen. Beispielsweise kann die Richtlinien-Datenbank 19 als Policy-Definition-Punkt bezeichnet werden. Diese kann beispielsweise applikationsspezifische beziehungsweise anwendungsprogrammspezifische Richtlinien definieren beziehungsweise zur Verfügung stellen. In einem optionalen dritten Schritt S3 kann ein Authentisierungstoken mit Kontextinformationen erstellt beziehungsweise generiert werden. Dies entspricht wiederum der Zugriffsinformation 14. Mit diesem Authentisierungstoken, welcher Kontextinformationen enthält, kann sich die Client-Anwendung 3 in einem optionalen vierten Schritt S4 an einem SSH-DAEMON ("Secure-Shell-Deamon") anmelden. Hierbei kann es sich beispielsweise um eine Terminal-Session via SSH handeln.

Insbesondere kann der Zero-Trust-Policy-Enforcement-Punkt 21 in der von der Authentisierungsanwendung 6 abgefragten und dem Request zugewiesenen Authentisierungsinformation, die beispielsweise als Zertifikat, signiertes Token ausgestellt wird, zusätzlich Client-spezifische Informationen (Kontextinformation 13) hinterlegen, die zunächst an die Clientanwendung 3 zurückgeschickt werden. Diese Client-spezifischen Informationen können hierbei beispielsweise als eigenständige Meta-Informationen, verschlüsselt oder nach einem festen Verfahren (zum Beispiel gewisse Werte an einer definierten Stelle des Trust-Scores) berechnet werden, die den Gesamt-Score, also den Trust-Score, repräsentieren.

Ebenso können weitere Attribute, die den Kontext des Requests oder die globale Bedrohungslage betreffen, zu Authentisierungsinformation gehören. In einer Ausführung ist die Authentisierungsinformation (Zugriffsinformation 14) als Stellenwert-System codiert, sodass über eine geeignete Maske alle Attribute, die zur Authentisierung genutzt und zusammengefügt wurden, rekonstruiert werden können. Der Trust-Score muss vom Aussteller, also der Authentisierungsanwendung 6, signiert sein.

Die Client-Anwendung 3 kann sich mit der Zugriffsinformation 14 an der auf dem Ressource-Server (Endgerät 4) betriebenen Applikation (Anwendungsprogramm 7), welche aufgrund der im Token hinterlegten Eigenschaften eine Autorisierung des Zugriffs auf eine angeforderte Ressource durchführt. Im Rahmen des Anmeldevorgangs kann hierzu die Authentisierungsinformation (Zugriffsinformation 14) validiert werden.

Sofern die Autorisierung, wie beispielsweise bei einer Terminal-Sitzung per SSH, nur beim Anmeldevorgang durchgeführt werden, werden die mit der Authentisierungsinformation mitgelieferten Attribute (zusätzliche Attribute) in einer auf dem System betriebenen nicht-persistenten, sicheren Attribut-Datenbank (Attribute-Datenbank 20) mitsamt der zugrundeliegenden Session-ID (der Sitzung für den Zugriffsautorisierungsvorgang) zwischengespeichert. Die Session-ID kann hierbei zum Beispiel durch die Prozess-ID des Login-Prozesses definiert werden oder zufällig ermittelt werden. Hierzu kann in einem optionalen fünften Schritt S5 die Autorisierung mit dem Token bei dem Anmeldevorgang durchgeführt werden. Dies kann beispielsweise mit einem Authentisierungs-Modul 23 ("Plugable Authentification Module System)erfolgen.

In einem optionalen sechsten Schritt S6 kann wiederum eine Erfassung der Attribute mit Werten pro Sitzung beziehungsweise Session erfolgen und in der Attribute-Datenbank 20 zwischengespeichert werden. Auf die Attribute-Datenbank 20 kann nur ein SSH-Zugriff erfolgen.

In einem optionalen siebten Schritt S7 kann nach dem Anmeldevorgang eine Anforderung für den Anwendungsstart des Anwendungsprogramms 7 erfolgen. Hierzu kann beispielsweise eine Login-Shell gestartet werden. Hierzu kann beispielsweise eine Autorisierungszuteilungskomponente 24, welche beispielsweise Bestandteil der Servereinheit 5 ist, verwendet werden. Diese kann beispielsweise als eigenständiges Kernel-Modul realisiert werden.

In einem optionalen achten Schritt S8 kann wiederum durch die Autorisierungszuteilungskomponente 24 eine Ermittlung der Session beziehungsweise Sitzung und der dazugehörigen Privilegien bezüglich der Client-Anwendung 3 erfolgen.

In einem neunten Schritt S9, welcher optional ist, kann die Ermittlung Session-bezogener Privilegien hinsichtlich der Sitzung erfolgen. Diese können durch geladene Applikationsrichtlinien 27 erfolgen.

In einem optionalen zehnten Schritt S10 kann wiederum die Ausführung des Programms beziehungsweise des Anwendungsprogramms 7 erfolgen. Somit erfolgt hier ein Prozessstart 28 des Anwendungsprogramms 7. Zusätzlich kann beispielsweise der Autorisierungszuteilungskomponente 24 anhand eines Privilegien-Ladeprogramms 25 ein Regelwerk zur Verfügung gestellt werden. Dieses Privilegien-Ladeprogramm 25 kann wiederum anhand der Richtlinien-Datenbank 19, welche Applikationsrichtlinien 26 enthält, zur Ermittlung für Einschränkungen des Anwendungsprogramms 7 betrachtet werden.

Im nachfolgenden werden vorteilhafte Ausführungen der vorliegenden Erfindung mit anderen Worten erläutert.

Des Weiteren kann die Session-ID zum Beispiel durch eine Prozess-ID des Login-Prozesses definiert oder zufällig ermittelt werden. Bei einem Login-Vorgang (zum Beispiel per SSH-Modeservicedienst) ist die Prozess-ID erst bekannt, sobald die Login-Shell 22 gestartet wird. In diesem Fall wird daher zunächst eine generische Session-ID verwendet und die finale Prozess-ID erst nach erfolgtem Start der Login-Shell (Schritt S7) der Attribut-Datenbank 20 zugeordnet. Zusätzlich muss sichergestellt sein, dass nur definierte Applikationen, wie zum Beispiel der SSH-Serverdienst, auf die Attribut-Datenbank 20 zugreifen kann. Der Zugriff kann beispielsweise bei Linux-Systemen auf entsprechenden PAM-Modulen (Plugable Authentification Module 23) eingeschränkt werden, welche der Attribut-Datenbank 20 als nicht-flüchtige Komponente verwalten. Des Weiteren ist es möglich, dass die Datenbank 20 mithilfe einer eigenständigen Server-Komponente auf dem System 1 betrieben wird, auf die sich eine hinterlegte Applikation mithilfe entsprechender Zugangsdaten beispielsweise per Unix-Domain-Socket anmeldet.

Beispielsweise kann innerhalb der Sitzung ein neuer Prozess (beispielsweise Unterprogramm 17 oder Funktion 18) gestartet werden, beispielsweise eine Login-Shell. Dieser neue Prozess kann mithilfe unterschiedlicher Maßnahmen eingeschränkt werden. Neben den typischen Prozessprivilegien, wie erlaubte System-Calls oder Capabilities, können beim Anwendungsbeispiel einer Login-Shell mithilfe weiterer Serverdienste auch das Ausführen weiterer Operationen kontextbezogen verboten oder erlaubt werden.

Hierfür werden am Beispiel eines Linux-Systems beispielsweise die Lösungen "sudo" oder "fapolicyd" eingesetzt. Um hierfür kontextbezogene Einschränkungen durchführen zu können, kann für jede auf dem System 1 befindliche Anwendung beziehungsweise Anwendungsprogramm 7 hinterlegt werden, bei welchem Attributtyp und welchem Wert welche Einschränkung umzusetzen ist. Die hierfür zu definierende Richtlinie kann hierbei in einem zentralen "Policy Definition Point" (Richtlinien-Datenbank 19) hinterlegt werden. Diese kann vom Zielsystem (System 1), auf welchem die Applikation (Anwendungsprogramm 7) betrieben wird, entweder angefragt werden, von diesem auf die Zielsysteme (auch mithilfe einer Signaturintegrität gesichert) verteilt werden oder lokal auf dem jeweiligen System 1 hinterlegt werden. Für jedes Attribut wird hierfür auf mithilfe einer Autorisierungszuteilungskomponente 24 und der Attribut-Datenbank 20 Session-bezogen (also für jede einzelne Sitzung) die zu erteilenden Privilegien beziehungsweise Zugriffsrechte beziehungsweise Zugriff ermittelt. Die Autorisierungszuteilungskomponente 24 kann als eigenständiger Server-Prozess auf dem System 1 betrieben werden, welches die Richtlinie im User-Space verwaltet und mithilfe eines eigenen Kernel-Moduls oder von "Extended Berkeley Packet Filter Programmen" vom Kernel über den Start eines neuen Prozesses informiert wird und der Kernel so lange wartet, bis dieser von der Zuteilungskomponente 24 die für die Session relevanten Privilegien mitgeteilt bekommt. Alternativ kann die Autorisierungszuteilungskomponente 24 Bestandteil des Kernel sein. In diesem Fall wird diese Komponente als beispielsweise eigenständiges Modul implementiert, welches das Regelwerk, wie beispielsweise bei Firewall-Regeln, beim Start des Systems oder bei Änderung aktiv durch ein Userspace-Programm aktiv übergeben bekommt.

Wird wiederum innerhalb des Anwendungsprogramms 7 weitere Programme (Unterprogramm 17 beispielsweise) ausgeführt, insbesondere innerhalb einer Shell, kann die Autorisierungszuteilungskomponente 24 Attribute der jeweiligen initialen Session ermitteln. Dies kann beispielsweise über die Ermittlung des Login-Prozesses beziehungsweise dessen ID innerhalb der Prozessverwaltung des Systems ermittelt werden. Die zu erteilenden Privilegien können entweder über die Vereinigungsmengen über alle Attribute hinweg gebildet werden oder über Best-Match-Policy auf die hinterlegten Attribute gebildet werden, wobei diese gegebenenfalls entsprechend gewichtet werden können. Des Weiteren ist auch ein Score-basierter Ansatz möglich, wobei system- beziehungsweise anwendungsspezifisch ein entsprechender Score (Vertrauensmaß 12) unter Berücksichtigung der zu verwendenden Applikation (Anwendungsprogramm 7) ermittelt werden kann.

Ein jeweiliges Verhalten kann in der Richtlinie definiert werden. Um für die Session gegebenenfalls kontextbezogene Servicedienste und "Application Whitelisting" parallel zur Session beziehungsweise Sitzung einrichten zu können, kann vorgesehen sein, dass zusätzlich zu den direkt dem Anwendungsprogramm 7 zugewiesenen Privilegien (Zugriffsinformation 14) auch weitere Anwendungen (Unterprogramme 17 und Funktionen 18) referenziert werden, für die parallel zum Start des Anwendungsprogramms 7 weitere Policies beziehungsweise Richtlinien ermittelt werden sollen und gegenläufig zum Start des Anwendungsprogramms 7 ebenfalls eingerichtet werden sollen.

Sind die Session-bezogenen Einschränkungen ermittelt (also für die Zugriffsrechte für eine Sitzung der Client-Anwendung 3), kann das Anwendungsprogramm 7 gestartet werden. Sofern nebenläufige weitere Anwendungen wie zum Beispiel Unterprogramme zur Einschränkung der Hauptanwendung (Anwendungsprogramm 7) ausgeführt werden, müssen diese die Session-bezogene Durchsetzung von Einschränkung unterstützen, indem zum Beispiel ein Session-bezogenes Durchsetzen von Einschränkung unterstützen, indem zum Beispiel ein Session-bezogenes Application-Whitelisting durchgeführt wird. Ein solches Programm kann parallel zur initial gestarteten Anwendung (Anwendungsprogramm 7) ausgeführt und setzt beispielsweise im Betriebssystemkern Einschränkungen um, indem diese lediglich für die Prozess-ID des Anwendungsprogramms 7 gelten. Werden lokale Serverdienste, wie eine Datenbank oder der Zugriff auf Container-Laufzeitumgebungen eingeschränkt, so müssen diese die Session beziehungsweise Sitzung der Client-Anwendung 3, indem diese beispielsweise mithilfe von Auditsystemen des Betriebssystems oder entsprechenden "Extended Berkley Packet Filter Programmen" ermitteln, welches Prozess-ID auf den Serverdienst zugreift. Die Prozess-ID kann einer Session zugeordnet werden, indem auch Kind-Prozesse über die Prozessverwaltung des Systems dem übergeordneten eingeschränkten Prozess zugeordnet werden können. Der Serverdienst kann hierzu anfragen. Der Servicedienst kann hierbei die für die Session hinterlegten Attribute bei der Attributdatenbank 20 abfragen und wendet diese mit den für die Richtlinie hinterlegten Verfahren (zum Beispiel Einigungsmengen oder First-Match) an, um für die Serverkomponente die Einschränkungen zu ermitteln. Nachdem die Einschränkungen ermittelt sind, wird zunächst überprüft, ob die Verbindung zur lokalen Serverkomponente erlaubt wird und, falls ja, kann anschließend innerhalb der Server-komponente für die Session eine applikationsbezogene Einschränkung definiert werden. Hierzu können wiederum die Zugriffsinformationen 14 berücksichtigt werden.

Sofern weitere, nicht auf dem System betriebene Applikationskomponenten, wie zum Beispiel über das Netzwerk, abgerufen werden sollen, kann vorgesehen sein, dass entweder die Client-Anwendungen 3 selbst, welche die Anfrage aufbauen, bei der lokalen Attributdatenbank 20 ein Session-bezogenes Authentisierungsobjekt anzufordern oder ein eigenständiger Dienst auf der Server-Seite dieses von der Client-Anwendung 3 anfordern kann. Die Autorisierung an einem entfernten Dienst erfolgt dann analog wie beim initialen Verbindungsaufbau, jedoch wird hierfür nicht mehr das vom Zero-Trust-Policy-Enforcement-Punkt 21 ausgestellte Authentisierungstabu verwendet. Stattdessen wird zur Autorisierung das von der Attributbank erstellte und signierte Session-basierte Objekt (Attribut) verwendet.

## Patentansprüche

1. Verfahren zum Durchführen eines Autorisierungsvorgangs einer Client-Anwendung (3) in einem Computernetzwerk-System (1),
**dadurch gekennzeichnet, dass**
- ein individuelles Vertrauensmaß (12) der Client-Anwendung (3) mit einer Authentisierungsanwendung (6) generiert wird,
- eine Kontextinformation (13) zu der Client-Anwendung (3) von der Authentisierungsanwendung (6) generiert wird,
- in Abhängigkeit von der Kontextinformation (13) und dem Vertrauensmaß (12) eine Zugriffsinformation (14) der Client-Anwendung (3) für ein Anwendungsprogramm (7) des Computernetzwerk-Systems (1) bestimmt wird.

2. Verfahren nach Anspruch 1, **dadurch gekennzeichnet, dass** die Client-Anwendung (3) auf einem Endgerät (4) des Computernetzwerk-Systems (1) ausgeführt wird, wobei für das Generieren des Vertrauensmaßes (12) eine Eigenschaft des Endgeräts (4) und/oder eine Eigenschaft der Client-Anwendung (3) und/oder eine Benutzerinformation eines Benutzers (15) der Client-Anwendung (3) und/oder eine Eigenschaft einer Kommunikationsverbindung (16) zwischen dem Endgerät (4) und dem Computernetzwerk-System (1) berücksichtigt wird.

3. Verfahren nach Anspruch 1 oder 2, **dadurch gekennzeichnet, dass** in Abhängigkeit von der Zugriffsinformation ein Zugriff auf das Anwendungsprogramm (7) gestattet wird, wobei abhängig von der Kontextinformation (13) zusätzlich ein Zugriff der Client-Anwendung (3) auf zumindest ein Unterprogramm (17) des Anwendungsprogramms (7) und/oder zumindest eine Funktion (18) des Anwendungsprogramms (7) gestattet wird.

4. Verfahren nach Anspruch 3, **dadurch gekennzeichnet, dass** abhängig von der Kontextinformation (13) bei dem Zugriff auf das Anwendungsprogramm (7) ein Funktionsumfang, ein Zugriffsrecht, ein Programmumfang, eine Anzahl an zugriffsberechtigten Unterprogrammen und/oder Funktionen, eine Anwendungsdauer, ein Lesezugriff und/oder ein Schreibzugriff für das zumindest eine Unterprogramm (17) und/oder die zumindest eine Funktion (18) des Anwendungsprogramms (7) bestimmt wird.

5. Verfahren nach einem der vorhergehenden Ansprüche, **dadurch gekennzeichnet, dass** in einer Richtlinien-Datenbank (19) eine Richtlinie für die Authentisierungsanwendung (6) bereitgestellt wird, wobei abhängig von mindestens einem Vertrauens-Kriterium, welches in der Richtlinie hinterlegt ist, das individuelle Vertrauensmaß der Client-Anwendung (3) mit der Authentisierungsanwendung (6) generiert wird.

6. Verfahren nach einem der vorhergehenden Ansprüche, **dadurch gekennzeichnet, dass** das Vertrauensmaß (12) von der Authentisierungsanwendung (6) als Zertifikat signiert wird, wobei dieses signierte Zertifikat der Client-Anwendung (3) zugewiesen wird.

7. Verfahren nach einem der vorhergehenden Ansprüche, **dadurch gekennzeichnet, dass** abhängig von der bestimmten Zugriffsinformation (14) eine Sitzung der Client-Anwendung (3) auf dem Anwendungsprogramm (7) durchgeführt wird, wobei innerhalb dieser Sitzung eine jeweils aktuelle Kontextinformation dynamisch festgestellt wird und eine dynamische Zuteilung von Zugriffsrechten der Client-Anwendung (3) für Unterprogramme (17) und/oder Funktionen (18) des Anwendungsprogramms (7) in Abhängigkeit von der jeweils festgestellten aktuellen Kontextinformation durchgeführt wird.

8. Verfahren nach einem der vorhergehenden Ansprüche, **dadurch gekennzeichnet, dass** eine Vertrauenswürdigkeits-Liste mit Kontextinformationswerten und Vertrauensmaßwerten bereitgestellt wird, wobei der Client-Anwendung (3) mit der Vertrauenswürdigkeits-Liste Zugriffsrechte auf das Anwendungsprogramm (7) und/oder weiteren Anwendungsprogramme zugewiesen werden.

9. Verfahren nach einem der vorhergehenden Ansprüche, **dadurch gekennzeichnet, dass** die bestimmte Zugriffsinformation (14) auf Basis eines Stellenwert-Systems kodiert wird.

10. Verfahren zum Ausführen eines Anwendungsprogramms, bei dem sich eine Client-Anwendung (3) entsprechend einem Verfahren nach einem der vorhergehenden Ansprüche 1 bis 9 autorisiert, und der Client-Anwendung (3) entsprechend der Zugriffsinformation (14) Zugriff auf das Anwendungsprogramm (7) gestattet wird.

11. Verfahren nach Anspruch 10, **dadurch gekennzeichnet, dass** die Zugriffsinformation (14) zusätzlich mit mindestens einem Attribut versehen wird, und in einer Attribut-Datenbank (20) des Anwendungsprogramms (7) gespeichert wird.

12. Verfahren nach Anspruch 11, **dadurch gekennzeichnet, dass** abhängig von dem gespeicherten Attribut ein spezieller Zugriff der Client-Anwendung (3) auf ein Unterprogramm (17) und/oder eine Funktion (18) des Anwendungsprogramms (7) bestimmt wird.

13. Computernetzwerk-System (1) mit,
- einer Client-Einheit (2) zum Ausführen einer Client-Anwendung (3) und
- einer Servereinheit (5) zum Ausführen einer Authentisierungsanwendung (6) und eines Anwendungsprogramms (7), wobei
- das Computernetzwerk-System (1) ausgebildet ist, um ein Verfahren nach einem der vorhergehenden Ansprüche 1 bis 12 auszuführen.

14. Computerprogrammprodukt (10), welches direkt in einen Speicher (9) einer Steuereinrichtung (8) eines Computernetzwerk-Systems (1) nach Anspruch 13 ladbar ist, mit Programm-Mitteln, um ein Verfahren nach einem der Ansprüche 1 bis 12 auszuführen, wenn das Programm (10) in der Steuereinrichtung (8) des Computernetzwerk-Systems (1) ausgeführt wird.

15. Elektronisch lesbarer Datenträger (11) mit darauf gespeicherten elektronisch lesbaren Steuerinformationen, welche derart ausgestaltet sind, dass sie bei Verwendung des Datenträgers (11) in einer Steuereinrichtung (8) eines Computernetzwerk-Systems (1) nach Anspruch 13 ein Verfahren nach einem der Ansprüche 1 bis 12 durchführen.
